# EUROPEAN PATENT APPLICATION

(11) **EP 2 814 133 A1**
(43) Date of publication of application: **17.12.2014**
(21) Application number: 13172047.6
(22) Date of filing: 14.06.2013
(51) Int. Cl.: H02J 7/02, G06K 19/077, G07F 15/00

(54) **Restricted rechargeable mobile device**

(71) Applicant: Knightsbridge Portable Communications SP, George Town, Grand Cayman (KY)
(72) Inventor: Daniels, Lewis, Llantrisant, CF72 8LP Wales (GB)
(74) Representative: Sonn & Partner Patentanwälte

(57) **Abstract**

A mobile device (1) with a primary power source (3) configured to power the general operation of the device (1), which primary power source (3) is rechargeable via a charging connection, wherein the charging connection is controlled by an authentication module (11) configured to conditionally establish the charging connection, which authentication module (11) is connected to an auxiliary power source (12).

## Description

The invention concerns a mobile device with a primary power source configured to power the general operation of the device, which primary power source is rechargeable via a charging connection and a method for limiting the operation of such a mobile device. In particular, the invention relates to portable, personal devices, especially "smart" devices such as mobile phones, tablet computers, devices and applications for personal information management, laptops, mobile storage devices and portable computer devices in general, which may contain confidential information, but also to motorized mobile applications providing a restricted function or operation mode.

The use of mobile devices for private, confidential or otherwise restricted matters goes hand in hand with suitable means to protect functions or information potentially accessible through such devices to third parties. This commonly involves access control mechanisms based on one or more, in general reproducible authentication tokens. An illegitimate third party may obtain the authentication token by search and through trial and error. This problem may be partly avoided by limiting the number of trials. However, this strategy is not practicable for automatic authentication procedures between two devices, i.e. which do not require any dedicated user interaction, especially when wireless, proximity-based authentication mechanisms are involved, because the protected device could be easily rendered unusable while still in the possession or control of the legitimate holder.

At the same time, the operation of the mobile device is naturally limited by the capacity of the power source powering the mobile device, such as a rechargeable battery or other refillable power sources. However, common mobile devices can easily be charged or refilled (charging, recharging, filling and refilling are used essentially synonymous in the following) by anyone providing an energy source matching the requirements of the device, e.g. a matching plug and voltage. Consequently, there is basically no time limit for operation of the device and the search for the authentication token. An illegitimate third party will be able to find the token sooner or later.

For electrical power sources, the situation can be significantly improved by a secure charging system as disclosed in the application GB1220930.0, which introduces the requirement of a congruity to be established between a charging station and a device to be charged before the charging may actually take place. However, once the battery of the device is discharged, the data on the device becomes inaccessible as there remains no possibility to establish the required congruity and recharge the battery. This is a serious disadvantage, as a complete discharge of the battery may easily happen during normal use, e.g. due to power-consuming wireless data transmission or CPU-intensive tasks, both of which may also be triggered/provoked from the outside, effectively constituting a vulnerability of the device.

It is therefore object of the invention, to provide a possibility for recharging the primary power source even when it is completely empty, while still providing the additional security achieved by requiring an authorization for charging or refilling the primary power source.

The above-mentioned problem is solved according to the present invention by a mobile device of the type as defined at the outset, wherein the charging connection is controlled by an authentication module configured to conditionally establish the charging connection, which authentication module is connected to an auxiliary power source. When the primary power source is discharged, the general operation of the device is not powered any more and any power-consuming tasks are naturally terminated. At the same time, the auxiliary power source continues to power the authentication module, sustaining the possibility of recharging the primary power source once the charging is authorized by the authentication module. The authentication module is configured to authenticate and verify an authentication token and, when indicated, grant the authorization to charge the primary power source. It may comprise means to electronically or mechanically connect to or determine an authentication token, such as a smart card, a key, a dedicated authentication sender, a biometric feature or the like. The authentication module may hold one or more valid authentication templates, e.g. stored within a data storage element or represented by a mechanical pattern. The authentication module may further comprise a timer to associate a time limit with any granted authorization and revoke the authorization after a pre-defined duration.

Correspondingly, according to the present invention, the aforementioned problem is solved by a method for limiting the operation of a mobile device as defined at the outset, comprising a rechargeable primary power source and an auxiliary power source, by denying the charging of the primary power source unless an authorization is granted, wherein an auxiliary power source has to be at least partly charged before the primary power source may be charged. Therefore, the time limit for potential break-in attempts is advantageously maintained due to the limited capacity of the auxiliary power source, but now this time limit can not be artificially shortened and the device rendered permanently unusable by discharging the primary power source.

In particular, an authentication and authorization procedure required to authorize the charging of the primary power source is powered by the auxiliary power source. In this instance, the authentication and authorization may be performed independent of the charge state of the primary power source.

The charging connection to the primary power source is preferably fail-secure, such that the primary power source may be chargeable only during correct operation of the authentication module. For the charging of the primary power source to be possible, the authentication module must actively establish and hold/maintain the charging connection. Any failure of the authentication module, in particular due to complete discharge of the auxiliary power source, breaks any established charging connection.

To exclude as far as possible any vulnerability which could allow intentional and detrimental discharge of the auxiliary power source, the auxiliary power source preferably powers only the authentication module. The power consumption of the authentication module is limited to the necessary minimum to provide exclusively the functions required for a successful authentication and subsequent charging of the primary power source. In particular, the auxiliary power source does not power any general-purpose tasks performed on the device or any wireless transmission units not required for authentication.

In a preferred embodiment, the charging connection comprises a reception coil configured to allow for induction charging of any attached power sources. Induction charging has the advantage, that no external physical port is required to transfer energy to charge at least the primary power source.

In particular it has been found advantageous that the primary power source, the auxiliary power source and any components powered by either of the two power sources or otherwise electrically connected to either or both of them are enclosed in a housing, which provides permanent electrical isolation against any direct-contact electrical connections from outside the housing. By the housing, which may preferably be a tamper-proof housing and/or protected by intrusion detection mechanisms, bypassing of the authentication module and direct charging of the primary power source can be prevented.

To provide for a simple charging of the device by the legitimate user, the charging connection can be configured to connect any attached power sources with an external charging station, wherein a connection between the primary power source and the charging station is established only upon successful authentication and authorization of the charging station through the authentication module. When the corresponding charging station is used to charge the device, no further interactions by the user to enable the charging connection are required. Hence, the user experience remains unchanged compared to a conventional mobile device using a charging station.

In general, it is preferred that the authentication module is configured to receive a wireless authentication signal. Thus, the authorization may be granted after a positive authentication, preferably through a wireless authentication signal. In this instance, the authentication may be performed without direct interaction with the device, e.g. without user interaction, and the device can be built without any physical external ports.

Additional security may be achieved if the authentication module is configured to determine its current location. In this case, the authorization may be granted as a function of the current location of the mobile device. For instance, the authentication module may comprise a GPS-sensor or the like and be configured to grant charging authorization only when located within a pre-defined geographic region, e.g. the home or office of the legitimate holder of the device. Location-based authorization may be combined with one or more authentication means to limit the acceptance of certain authentication tokens depending on the current position.

The invention will be defined in more detail below by means of preferred exemplary embodiments, to which it is not to be limited to, however, and with reference to the drawings. In detail:
Fig. 1 shows a schematic diagram of the components of a preferred embodiment of the mobile device; and
Fig. 2A and 2B show schematic diagrams of the mobile device together with different charging stations.

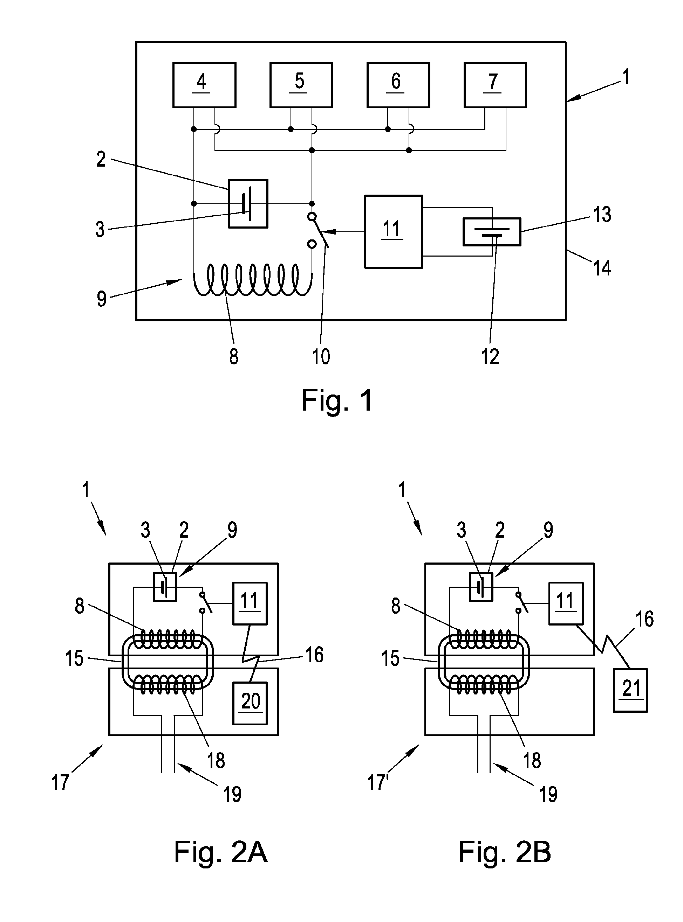

The mobile device 1 displayed in Fig. 1 comprises an accumulator 2 acting as a primary power source 3. The accumulator 2 powers the general-purpose operation components 4, 5, 6, 7 of the mobile device 1, in particular a CPU 4, a volatile memory 5, a wireless transmission unit 6 and a display driver unit 7. The accumulator 2 is connected to an induction coil 8, which is configured to be part of a charging connection to charge the accumulator 2 (s. Figs. 2A and 2B). The charging circuit 9, including the accumulator 2 and the induction coil 8, further comprises a charging switch 10 to control the charging connection. The charging switch 10 is of the type of a normally open contact, i.e. it is open in a relaxed state and must be actively closed. Only when the charging switch 10 is closed, charging of the accumulator 2 through the induction coil 8 is possible. The charging switch 10 is controlled by an authentication module 11, which is powered by an auxiliary power source 12 in the form of a battery 13 separate from the accumulator 2. The authentication module 11 closes the charging switch 10 only upon successful authentication and authorization, determined by an authentication and authorization procedure. Consequently, the charging of the accumulator 2 is fail-secure, i.e. when the authentication module 11 is inactive, the charging switch 10 is automatically opened. The auxiliary power source 12 may consist of one or more primary cells or one or more secondary cells. If the auxiliary power source 12 is rechargeable, it preferably uses the same charging connection as the primary power source 3, which is controlled by the authentication module 11. Therefore, once the auxiliary power source 12 is depleted, charging of either the primary or auxiliary power source 3, 12 is permanently disabled by the open charging switch 10.

The general-purpose operation components 4, 5, 6, 7 of the device 1, the authentication module 11, the primary power source 3, the auxiliary power source 12 and the induction coil 8 are enclosed in a sealed housing 14 without any external electrical direct-contact ports. Both, the energy transfer into the housing 14 and the exchange of authentication information and data between the device 1 and any external components is performed via wireless connections 15, 16 (s. Figs. 2A and 2B). Apart from wireless communication, the device 1 provides only non-electrical physical interfaces (e.g. buttons or touchscreens) for user interaction.

The authentication module 11 may implement one or more authentication mechanisms, which can be used in combination or independently. In particular, the authentication module 11 can be configured to receive wireless authentication messages containing authentication information via a wireless connection 16 (cp. Fig. 2A). For example, the authentication may be performed by wireless communication with a smart card, which contains an authentication token, or with an RFID tag. The received authentication information is compared with a configurable set of registered authentication records. If the authentication is successful, the authentication module 11 further verifies if the authenticated entity is authorized to charge the primary power source 3. Only if this is confirmed, the authentication module 11 closes the charging switch 10 to allow for induction charging of the accumulator 2. All the above, starting from the reception of a wireless authentication token until the manipulation of the charging switch 10, is powered by the auxiliary power source 12 and may be performed even when the primary power source 3 is completely empty and discharged. The authentication module 11 may further comprise a location sensor (not shown) and use the location data provided by the location sensor to determine the authorization of an authenticated entity.

Figs. 2A and 2B illustrate different possibilities of authentication. In Fig. 2A the mobile device 1 is brought into the proximity of a charging station 17. The charging station 17 contains an induction coil 18 to transfer energy from the power network 19 to the coil 8 inside the device 1 via a magnetic field 15. To enable charging of the primary power source 3, the charging station 17 further comprises an authentication sender 20, which transmits a stored authentication token to the authentication module 11 inside the mobile device 1 using a short-ranged wireless connection 16 (e.g. a Bluetooth or NFC connection or the like). If the token matches one of the authentication records stored in the device 1 and is authorized to enable charging of the device 1, the authentication module 11 closes the charging switch 10, and the energy is distributed from the power network 19 via the charging connection, comprising the two induction coils 18, 8 and the charging switch 10, to the accumulator 2 forming the primary power source 3. In this instance, charging is enabled whenever the device 1 is brought into proximity of and therefore is wirelessly linked to the charging station 17.

On the other hand, in Fig. 2B the authentication token required to enable charging is not stored inside the charging station 17'. The charging station 17' in this case may be a general-purpose charging station used to charge conventional, unsecured power sources. To enable the charging in this case, a separate authentication device 21 has to be brought into communication with the mobile device 1, such that an authentication message sent by the authentication device 21 may be received by the authentication module 11 within the mobile device 1 via a wireless connection 16. Only then, the charging connection will be established by the authentication module 11.

## Claims

1. A mobile device (1) with a primary power source (3) configured to power the general operation of the device (1), which primary power source (3) is rechargeable via a charging connection, **characterised in that** the charging connection is controlled by an authentication module (11) configured to conditionally establish the charging connection, which authentication module (11) is connected to an auxiliary power source (12).

2. The device (1) according to claim 1, **characterised in that** the charging connection is fail-secure, such that the primary power source (3) may be chargeable only during correct operation of the authentication module (11).

3. The device (1) according to claim 1 or 2, **characterized in that** the auxiliary power source (12) powers only the authentication module (11).

4. The device (1) according to one of claims 1 to 3, **characterized in that** the charging connection comprises a reception coil (8) configured to allow for induction charging of any attached power sources (3).

5. The device (1) according to one of claims 1 to 4, **characterised in that** the primary power source (3), the auxiliary power source (12) and any components powered by either of the two power sources (3, 12) or otherwise electrically connected to either or both of them are enclosed in a housing (14), which provides permanent electrical isolation against any direct-contact electrical connections from outside the housing (14).

6. The device (1) according to one of claims 1 to 5, **characterised in that** the charging connection is configured to connect any attached power sources (3) with an external charging station (17, 17'), wherein a connection between the primary power source (3) and the charging station (17, 17') is established only upon successful authentication and authorization through the authentication module (11).

7. The device (1) according to one of claims 1 to 6, **characterised in that** the authentication module (11) is configured to receive a wireless authentication signal.

8. The device (1) according to one of claims 1 to 7, **characterised in that** the authentication module (11) is configured to determine its current location.

9. A method for limiting the operation of a mobile device (1), comprising a rechargeable primary power source (3) and an auxiliary power source (12), by denying the charging of the primary power source (3) unless an authorization is granted, wherein an auxiliary power source (12) has to be at least partly charged before the primary power source (3) may be charged.

10. The method according to claim 9, **characterised in that** an authentication and authorization procedure required to authorize the charging of the primary power source (3) is powered by the auxiliary power source (12).

11. The method according to claim 9 or 10, **characterised in that** the authorization may be granted after a positive authentication, preferably through a wireless authentication signal.

12. The method according to one of claims 9 to 11, **characterised in that** the authorization may be granted as a function of the current location of the mobile device (1).
